# EUROPEAN PATENT APPLICATION

(11) **EP 4 555 846 A1**
(43) Date of publication of application: **21.05.2025**
(21) Application number: 23876675.2
(22) Date of filing: 10.10.2023
(51) Int. Cl.: A01D 34/64

(54) **RIDE-ON MOWING DEVICE**

(30) Priority: 11.10.2022 CN 202211239765; 11.10.2022 CN 202211242058; 11.10.2022 CN 202211239749; 18.01.2023 CN 202310076078
(71) Applicant: Nanjing Chervon Industry Co., Ltd., Nanjing, Jiangsu 211106 (CN)
(72) Inventor: HOU, Zhongyan, Nanjing, Jiangsu 211106 (CN); WANG, Lei, Nanjing, Jiangsu 211106 (CN); CHEN, Xu, Nanjing, Jiangsu 211106 (CN)
(74) Representative: Sun, Yiming
(86) International application number: PCT/CN2023/123682
(87) International publication number: WO 2024/078473

(57) **Abstract**

Provided is a riding mowing device. The riding mowing device includes a frame (91); a cutting assembly (10); a traveling assembly (93); a main control circuit (952) electrically connected to the cutting assembly (10) and the traveling assembly (93); and an operating member electrically connected to the main control circuit (952) and configured to control the forward state or the reverse state of the riding mowing device. The operating member has three gears: a forward gear, a neutral gear, and a reverse gear. The operating member is configured to control the riding mower to switch between the forward state and the reverse state when being operated through at least two gears. The main control circuit (952) is configured to acquire the device parameter of the riding mowing device during traveling and in the case where the operating member is operated to switch between the forward state and the reverse state, control the riding mowing device to stop traveling based on the acquired device parameter.

## Description

This application claims priority to Chinese Patent Application No. 202211239765.1, Chinese Patent Application No. 202211242058.8, and Chinese Patent Application No. 202211239749.2 filed with the China National Intellectual Property Administration (CNIPA) on Oct. 11, 2022 and Chinese Patent Application No. 202310076078.0 filed with the CNIPA on Jan. 18, 2023, the disclosures of which are incorporated herein by reference in their entireties.

### TECHNICAL FIELD

The present application relates to garden tools, for example, a riding mowing device.

### BACKGROUND

As a garden tool, a riding mowing device is widely used in the field of trimming lawns and vegetation. The riding mowing device is more labor-saving and more efficient in mowing than a push mower. In the related art, when the user wants to switch between the forward mode and the reverse mode, the user needs to release the accelerator, wait for the machine to stop moving, and then switch between the forward mode and the reverse mode.

This part provides background information related to the present application, and the background information is not necessarily the existing art.

### SUMMARY

An object of the present application is to solve or at least alleviate part or all of the preceding problems. For this reason, an object of the present application is to provide a riding mowing device that is easy to switch between the forward mode and the reverse mode and has high safety performance.

The present application provides a riding mowing device. The riding mowing device includes a frame; a cutting assembly mounted on the frame and including a mowing element for cutting grass; a traveling assembly including a traveling motor configured to drive the riding mowing device to travel on the ground; a main control circuit electrically connected to the cutting assembly and the traveling assembly; and an operating member connected to the main control circuit and configured to control the forward state or the reverse state of the riding mowing device. The operating member has three gears: a forward gear, a neutral gear, and a reverse gear. The operating member is configured to control the riding mower to switch between the forward state and the reverse state when being operated through at least two gears. The main control circuit is configured to acquire the device parameter of the riding mowing device during traveling and in the case where the operating member is operated to switch between the forward state and the reverse state, control the riding mowing device to stop traveling based on the acquired device parameter.

In some examples, the main control circuit is further configured to control the traveling motor to decelerate in the case where the operating member is switched to the neutral gear.

In some examples, the device parameter includes the traveling speed of the riding mowing device; and the main control circuit is configured to, in the case where the acquired traveling speed is less than or equal to a first speed threshold, control the riding mowing device to stop traveling.

In some examples, the first speed threshold is greater than or equal to 0.2 km/h and less than or equal to 0.4 km/h.

In some examples, the device parameter further includes the state of an accelerator assembly or the duration after the operating member is operated to the neutral gear.

In some examples, the main control circuit is configured to acquire the device parameter of the riding mowing device during traveling and in the case where the operating member is operated to the neutral gear, control the riding mowing device to stop traveling based on the acquired device parameter.

In some examples, the main control circuit is configured to control the riding mowing device to stop traveling in the case where the duration after the operating member is operated to the neutral gear is greater than or equal to a preset time threshold.

In some examples, the time threshold is greater than or equal to 2 seconds.

In some examples, in the case where the operating member is operated from the forward gear, through the neutral gear, to the reverse gear, the main control circuit is further configured to control the traveling assembly to switch from a first rotational state to a second rotational state.

In some examples, in the case where the operating member is operated from the reverse gear, through the neutral gear, to the forward gear, the main control circuit is further configured to control the traveling assembly to switch from the second rotational state to the first rotational state.

In some examples, in the case where the riding mowing device is switched between the forward state and the reverse state, the accelerator assembly is in a triggered state.

In some examples, in the case where the operating member is in the forward gear and the accelerator assembly is in a triggered state, the main control circuit is further configured to respond to the state of the accelerator assembly to control the riding mowing device to travel forward at a corresponding rotational speed.

In some examples, the main control circuit is further configured to acquire the device parameter of the riding mowing device during traveling and in the case where the operating member is operated to switch between the forward state and the reverse state, determine, based on the acquired device parameter, whether to respond to a forward gear signal or a reverse gear signal outputted by the operating member.

In some examples, the device parameter includes the traveling speed of the riding mowing device; and the main control circuit is further configured to, in the case where the acquired traveling speed is greater than a first speed threshold, respond to a forward gear signal or a reverse gear signal outputted by the operating member.

The present application provides a riding mowing device. The riding mowing device includes a frame; a cutting assembly mounted on the frame and including a mowing element for cutting grass; a traveling assembly including a traveling motor configured to drive the riding mowing device to travel on the ground; a main control circuit electrically connected to the cutting assembly and the traveling assembly; and an operating member electrically connected to the main control circuit and configured to control the forward state or the reverse state of the riding mowing device. The operating member has three gears: a forward gear, a neutral gear, and a reverse gear. The operating member is configured to control the riding mower to switch between the forward state and the reverse state when being operated through at least two gears. The main control circuit is configured to acquire the device parameter of the riding mowing device during traveling and in the case where the operating member is operated to switch between the forward state and the reverse state, determine, based on the acquired device parameter, whether to respond to a forward gear signal or a reverse gear signal outputted by the operating member.

In some examples, the device parameter includes the traveling speed of the riding mowing device; and the main control circuit is configured to, in the case where the acquired traveling speed is greater than a first speed threshold, respond to the forward gear signal or the reverse gear signal outputted by the operating member.

The present application provides a riding mowing device. The riding mowing device includes a frame; a cutting assembly mounted on the frame and including a mowing element for cutting grass; a traveling assembly including a traveling motor configured to drive the riding mowing device to travel on the ground; a main control circuit connected to the traveling motor and configured to control the operation of the traveling motor; a power supply device electrically connected to the traveling motor and the main control circuit; and an operating member connected to the main control circuit and configured to control the forward state or the reverse state of the riding mowing device. The operating member has at least three gears: a forward gear, a neutral gear, and a reverse gear. The main control circuit is further configured to acquire the device parameter of the riding mowing device during traveling and in the case where the operating member is operated to the neutral gear, control the riding mowing device to stop traveling based on the acquired device parameter.

In some examples, the device parameter includes the traveling speed of the riding mowing device, the state of an accelerator assembly, or the duration after the operating member is operated to the neutral gear.

### BRIEF DESCRIPTION OF DRAWINGS

FIG. 1 is a perspective view of a riding mowing device according to an example of the present application.
FIG. 2 is a bottom view of the riding mowing device in FIG. 1.
FIG. 3 is a perspective view of a control panel of the riding mowing device in FIG. 1.
FIG. 4 is a schematic diagram of a control system of the riding mowing device in FIG. 1.
FIG. 5 is a flowchart of a method for controlling a display screen on a control panel in

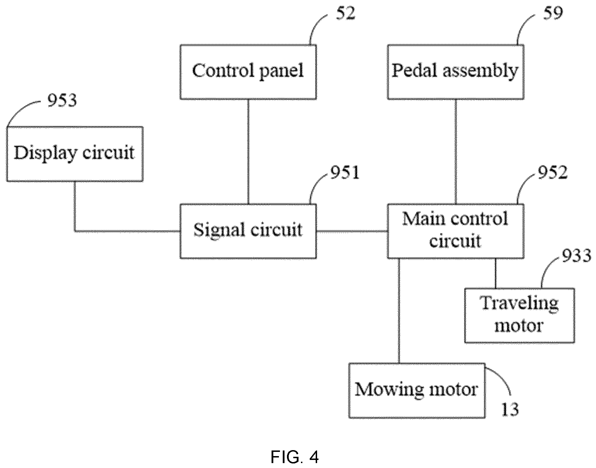

FIG. 4 to switch from a first display interface to a second display interface.

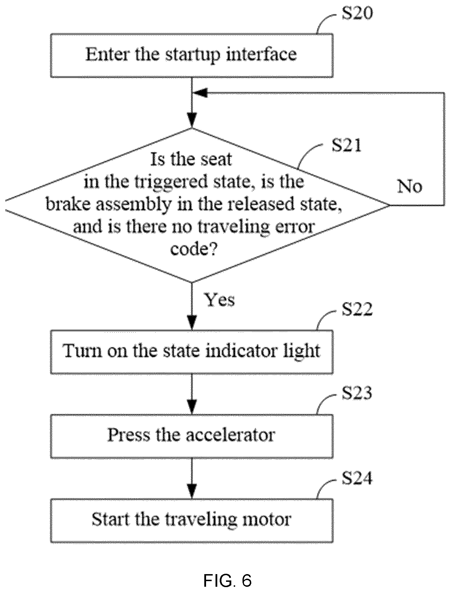

FIG. 6 is a flowchart of a method for controlling a traveling motor to switch from a first state to a second state according to an example of the present application.

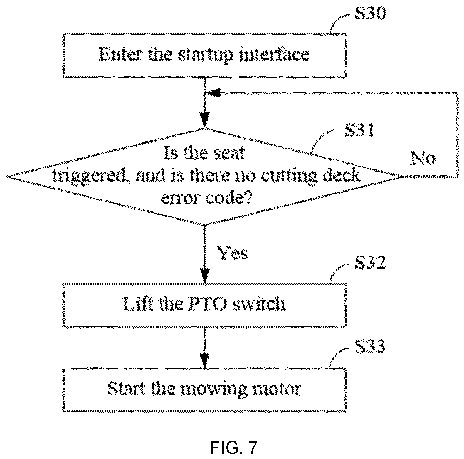

FIG. 7 is a flowchart of a control method for starting a mowing motor according to an example of the present application.

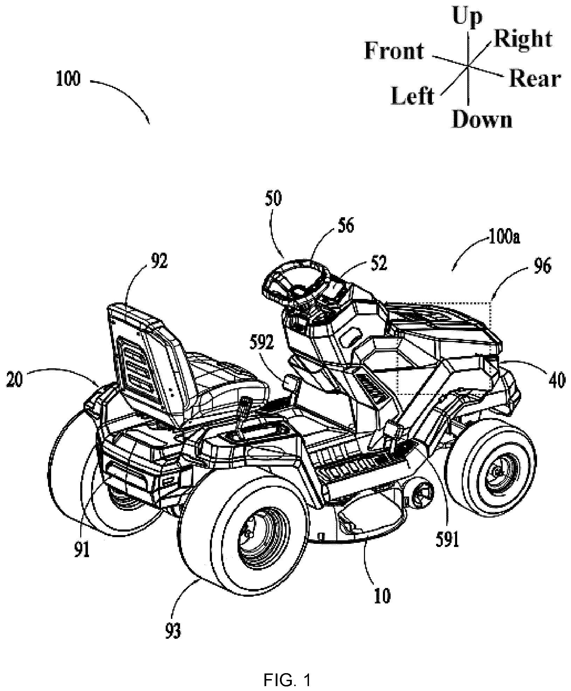

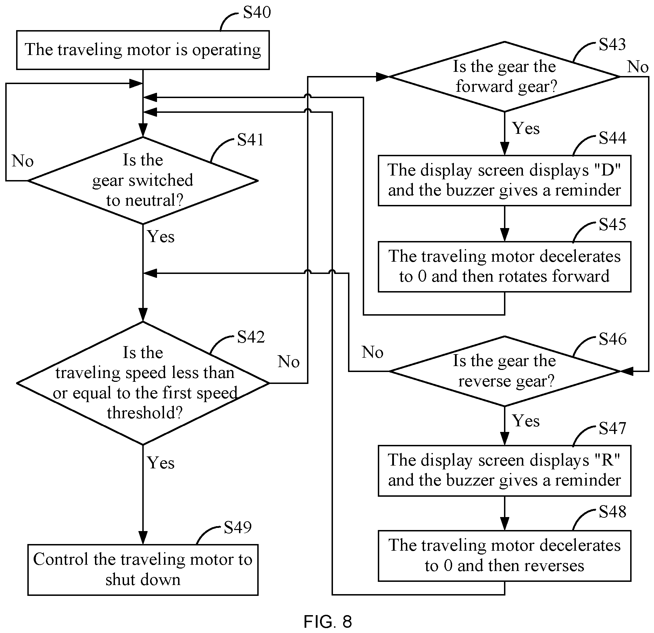

FIG. 8 is a flowchart of a method for controlling the riding mowing device in FIG. 1 to switch between forward motion and reverse motion.

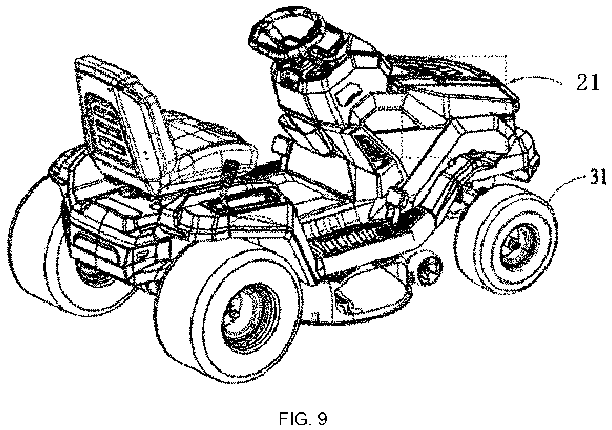

FIG. 9 is a perspective view of a riding mower according to an example of the present application.

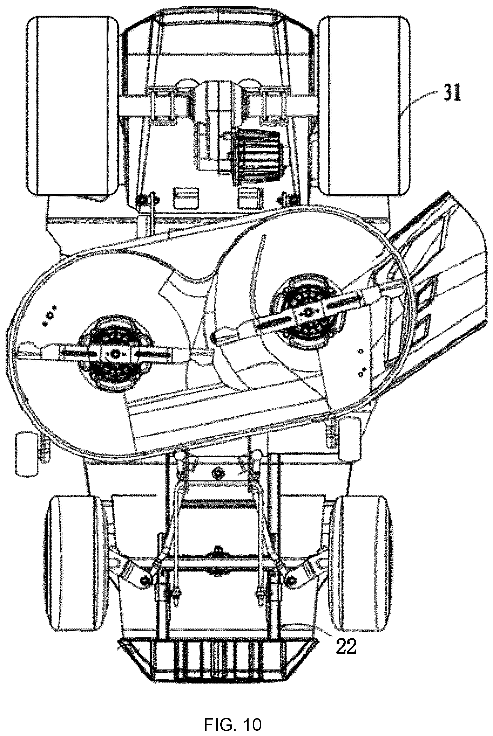

FIG. 10 is a perspective view of the riding mower shown in FIG. 9 from another perspective.

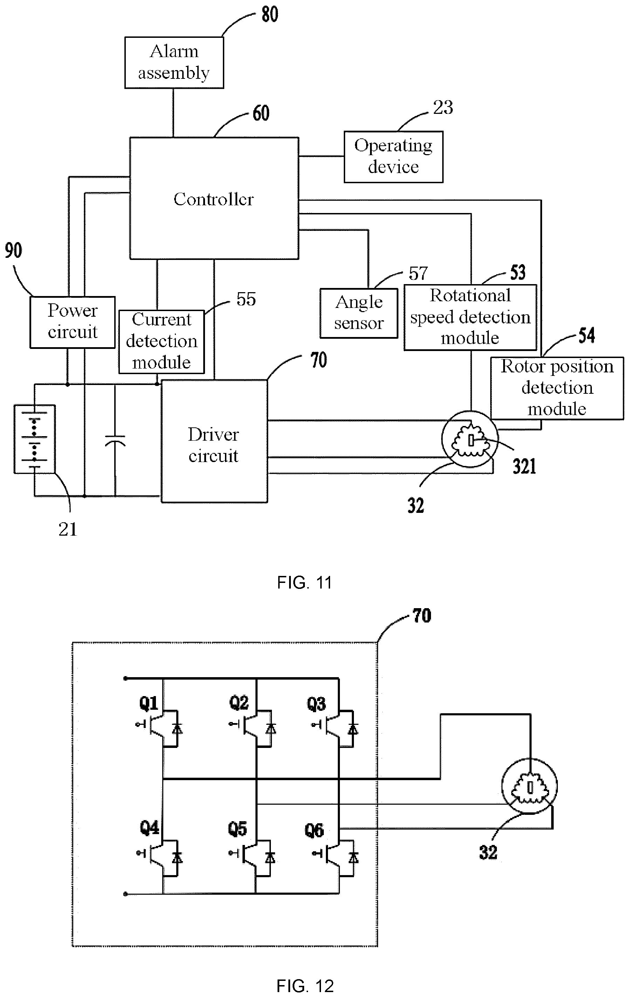

FIG. 11 is a control circuit diagram of the riding mower shown in FIG. 9.
FIG. 12 is a diagram illustrating the structure of a driver circuit according to an example of the present application.

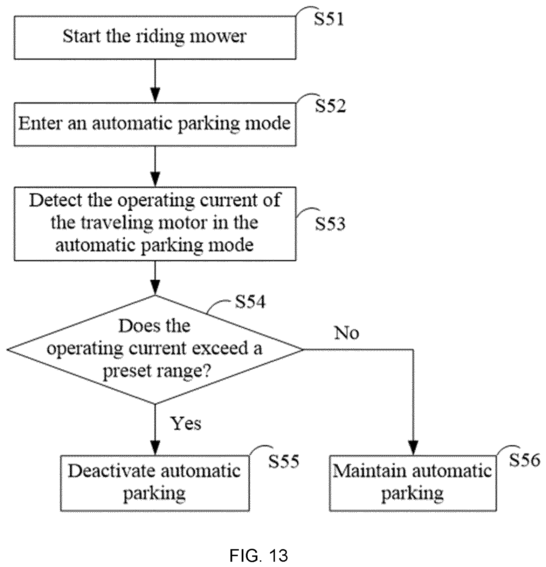

FIG. 13 is a flowchart of a control method for a riding mower according to an example of the present application.

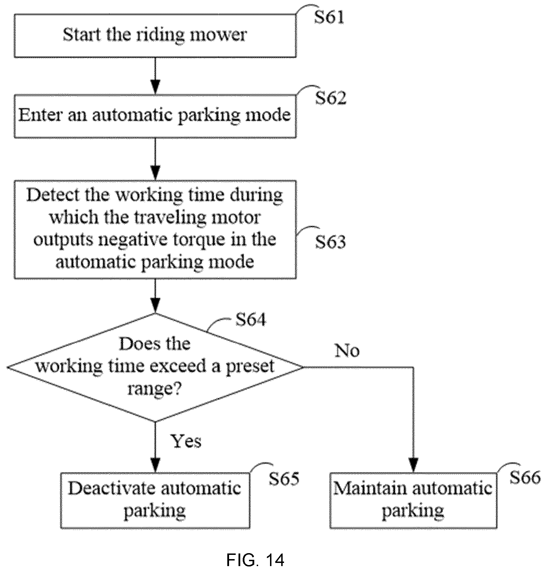

FIG. 14 is a flowchart of another control method for a riding mower according to an example of the present application.

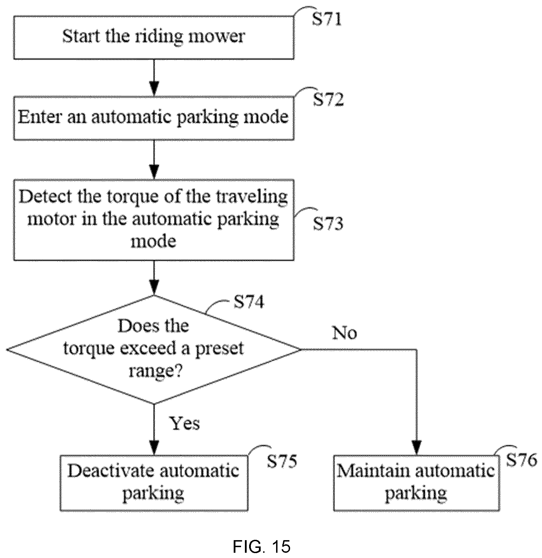

FIG. 15 is a flowchart of another control method for a riding mower according to an example of the present application.

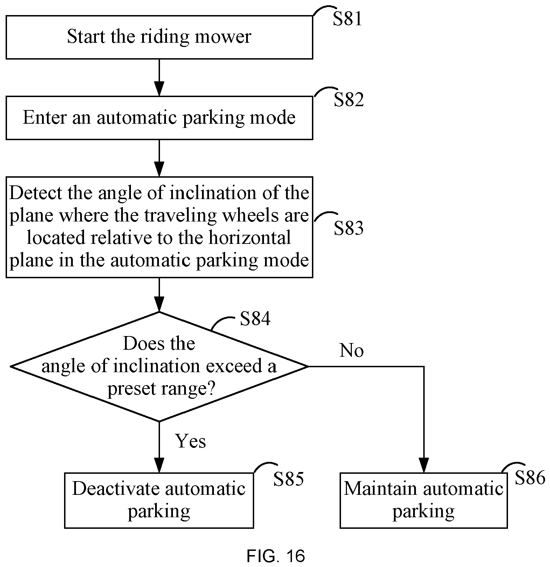

FIG. 16 is a flowchart of another control method for a riding mower according to an example of the present application.

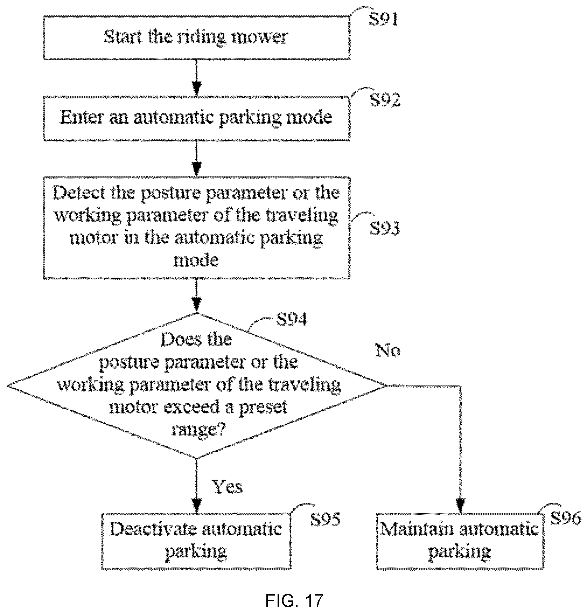

FIG. 17 is a flowchart of a control method for a riding mower according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

As shown in FIG. 1, a riding mowing device 100 in the present application is a lawn tractor. A user may sit on the lawn tractor to control the lawn tractor to trim lawns and other vegetation. In this specification, front, rear, left, right, up, and down are described as directions shown in FIG. 1. When the user sits on the riding mowing device 100 on the ground, it is defined that the direction which the user faces is front, the direction which the user faces away from is rear, the direction on the left-hand side of the user is left, the direction on the right-hand side of the user is right, the direction towards the ground is down, and the direction away from the ground is up.

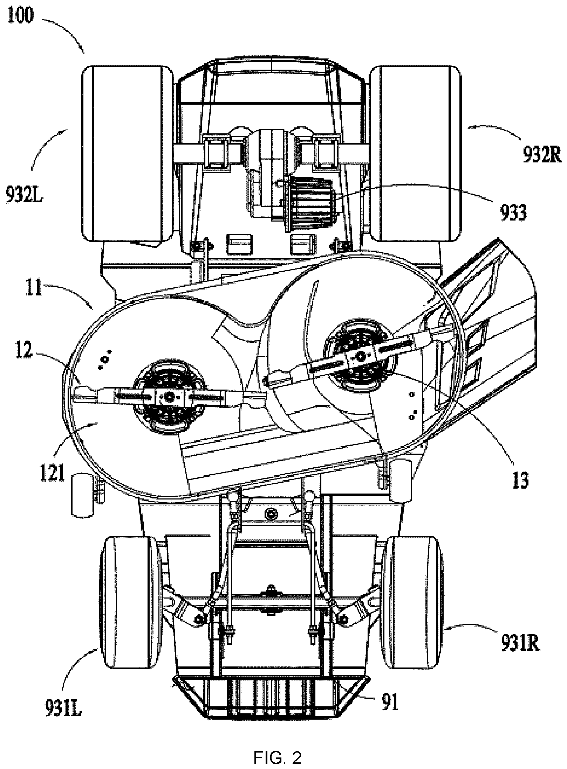

As shown in FIGS. 1 and 2, a riding mowing device 100 includes a cutting assembly 10, a frame 91, a seat 92, a housing system 20, a traveling assembly 93, a power supply assembly 96, an illumination system 40, and an operating assembly 50. The seat 92 is mounted on the frame 91 and is used for the user to sit on. The frame 91 carries the seat 92. The frame 91 and the housing system 20 form a body 100a of the riding mowing device 100, and the body 100a is used for mounting the cutting assembly 10, the seat 92, the power supply assembly 96, and the illumination system 40. The traveling assembly 93 is configured to support the body 100a. The riding mowing device 100 supplies energy to the cutting assembly 10, the traveling assembly 93, the illumination system 40, and the like through the power supply assembly 96 so that the riding mowing device 100 may be used as a power tool. The electric riding mowing device 100 is more environmentally friendly and more energy-efficient than a fuel-based riding mowing device 100. In some examples, the riding mowing device 100 includes a grass collecting device. The grass collecting device is configured to collect grass clippings cut off by the cutting assembly 10. The grass collecting device includes a grass collecting basket assembly detachably mounted behind the seat 92.

The cutting assembly 10 is a power output member configured to output power to implement the function of the riding mowing device 100. The cutting assembly 10 is disposed below the frame 91. In this example, the cutting assembly 10 includes a cutting deck 11, a mowing element 12, and a mowing motor 13. The mowing elements 12 are configured to cut vegetation while rotating at high speed. For example, the mowing elements 12 are blades that cut grass on the lawn. The cutting deck 11 surrounds a mowing space 121 which is open downward and at least partially accommodates the mowing elements 12. That is to say, the mowing elements 12 are at least partially accommodated in the cutting deck 11, and the mowing motors 13 are configured to drive the mowing elements 12 to rotate. In some examples, two mowing elements 12 may be provided and two mowing motors 13 may be provided. Correspondingly, the two mowing motors 13 drive the two mowing elements 12, respectively. In some examples, three mowing elements 12 may be provided and three mowing motors 13 may be provided. Correspondingly, the three mowing motors 13 drive the three mowing elements 12, respectively.

The cutting assembly 10 may be detachable from the riding mowing device 100. In some examples, other work attachments may be connected to the riding mowing device 100. For example, a snow shoveling assembly may be connected to the riding mowing device 100. In this case, the riding mowing device 100 is no longer just a riding mowing device, but a riding snow thrower. The riding mowing device 100 may perform different tasks according to different working attachments connected thereto.

The traveling assembly 93 is configured to support the frame 91 so that the riding mowing device 100 can travel on the ground. In this example, the traveling assembly 93 includes a first traveling assembly 931 and a second traveling assembly 932. The first traveling assembly 931 is a front traveling assembly, and the second traveling assembly 932 is a rear traveling assembly. The first traveling assembly 931 includes two first traveling wheels, that is, a first left traveling wheel 931L and a first right traveling wheel 931R. The second traveling assembly 932 includes two second traveling wheels, that is, a second left traveling wheel 932L and a second right traveling wheel 932R. The radius of the second traveling wheels is greater than the radius of the first traveling wheels. The traveling assembly 93 further includes a traveling motor 933 configured to drive the second traveling assembly 932.

The operating assembly 50 includes a control panel 52, a steering wheel assembly 56, and a pedal assembly. The pedal assembly includes an accelerator assembly 591 and a brake assembly 592. The steering wheel assembly 56 includes a steering wheel 561 operable by the user to control the traveling direction of the riding mowing device 100. The control panel 52 includes a display screen 51 and multiple operating members. The display screen 51 is configured to display the state information of the riding mowing device 100. The multiple operating members are operable by the user to control the state of the riding mowing device 100. In some examples, the operating members may include switches or buttons of different shapes or sizes, a gear shifter, or the like.

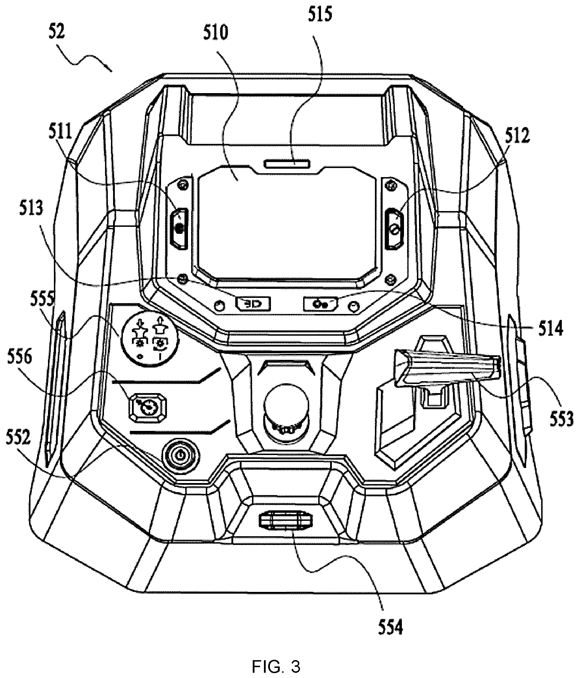

As shown in FIG. 3, the display screen 51 includes a display interface 510 for displaying the working state of the riding mowing device 100. The display interface 510 is understood as a display region directly observed by the user. Different state information may be displayed on the display interface 510 as needed. The traveling speed of the traveling assembly 93, the rotational speeds of the mowing elements 12, the energy efficiency state of the riding mowing device 100, the remaining power information of the power supply assembly 96, warning information, fault information, the remaining operating time of the power supply assembly, and the like may be displayed on the display interface 510.

In some examples, the operating members include multiple buttons arranged around the display interface 510. For example, a first button 511 and a second button 512 are configured to be operable by the user to adjust the traveling speed and the blade rotational speed of the riding mowing device 100, respectively. The first button 511 and the second button 512 may be disposed on the left side of the display interface 510 and the right side of the display interface 510, respectively. A third button 513 is further provided around the display interface 510 and is configured to be operable by the user to control the lighting function of the riding mowing device 100. For example, when the user operates the third button 513 in the first operating manner, the illumination system 40 turns on some of the lights. When the user operates the third button 513 in the second operating manner, the illumination system 40 turns on all the lights. In this example, a fourth button 514 is further provided around the display interface 510 and is operable by the user to make the riding mowing device 100 enter different driving modes, such as the sport mode, the normal mode, and the control mode. In this manner, the user can select different driving modes according to personal preferences, thereby improving the user experience of the riding mowing device 100. In this case, information about different driving modes of the riding mowing device 100 may be displayed on the display interface 510. Further, the fourth button 514 is operable by the user in different operating manners to perform other configurations of the riding mowing device 100. For example, long pressing the fourth button 514 switches the driving modes and short pressing the fourth button 514 enters a settings menu. The third button 513 and the fourth button 514 may be disposed on the lower side of the display interface 510.

In some examples, the operating members further include a start button 552 and a keyhole 554. When a key is inserted into the keyhole 554, the riding mowing device 100 can be started. When no key is inserted into the keyhole 554, the power supply of the riding mowing device 100 is cut off and the riding mowing device 100 cannot be started. When the start button 552 is triggered, the riding mowing device 100 enters a standby state. In this case, the user may operate other operating members to make the riding mowing device 100 to enter a traveling state, a mowing state, or the like.

In some examples, the operating members further include a power take-off (PTO) switch 555. The PTO switch 555 has a first position and a second position. When the PTO switch 555 is set to the first position, the mowing elements 12 rotate. When the PTO switch 555 is set to the second position, the mowing elements 12 stop. The PTO switch 555 is at the first position when lifted, and the PTO switch 555 is at the second position when pressed. When the user discovers an emergency, the user only needs to press the PTO switch 555 to make the mowing elements 12 stop urgently, making the operation quick and convenient.

In some examples, the operating members further include a cruise control button 556. When the cruise control button 556 is triggered, the riding mowing device 100 receives a cruise control command issued by the user and determines whether to enter a cruise control mode according to the current state.

In some examples, as shown in FIG. 4, the riding mowing device 100 further includes a control device configured to control the state of the riding mowing device 100. In this example, the control device includes a signal circuit 951, a main control circuit 952, and a display circuit 953. The signal circuit 951 is configured to receive the state information of the riding mowing device 100 and transmit the state information to the display circuit 953 of the display screen 51. The signal circuit 951 is further responsible for receiving switching signals from the multiple operating members on the control panel 52 and transmitting the switching signals to the main control circuit 952. The main control circuit 952 is configured to control the cutting assembly 10 and the traveling assembly 93. For the cutting assembly 10, the main control circuit 952 can control the operation of the mowing motors 13. For the traveling assembly 93, the main control circuit 952 can control the operation of the traveling motor 933. The main control circuit 952 includes a controller, such as some dedicated control chips.

In some examples, the main control circuit 952 has a first state in which the main control circuit 952 prohibits the traveling motor 933 from being started and a second state in which the main control circuit 952 allows the traveling motor 933 to be started. When the main control circuit 952 is in the first state, the user cannot start the traveling motor 933 through the operating assembly 50 on the riding mowing device 100. When the main control circuit 952 is in the second state, the user can start the traveling motor 933 by triggering the accelerator assembly 591. In this example, when the main control circuit 952 is in the first state, the mowing motors 13 are also prohibited from being started. The main control circuit 952 is configured to switch from the first state to the second state upon acquiring the output trigger signal from the start button 552 and detecting that the brake assembly 592 is operated. In this manner, the user can be effectively prevented from accidentally operating the accelerator assembly 591 and thus unconsciously starting the traveling motor 933, thereby improving the safety of the riding mowing device 100.

When the user inserts the key into the keyhole 554, the riding mowing device 100 enters the standby state. When the user triggers the start button 552, the display screen 51 is awakened, and the display interface 510 of the display screen 51 is a first display interface. The first display interface is configured to display the current remaining power of the power supply assembly 96. When the display screen 51 is in the first display interface, the main control circuit 952 is in the first state in which the main control circuit 952 prohibits the traveling motor 933 or the mowing motors 13 from being started. It is to be understood that when the display screen 51 is in the first display interface, the user cannot control the traveling motor 933 or the mowing motors 13 to be started through the operating assembly 50 of the riding mowing device 100.

When the display screen 51 enters the first display interface and the key is in the keyhole 554, the main control circuit 952 controls the display screen 51 to switch from the first display interface to a second display interface after detecting that the start button 552 is in a triggered state and the brake assembly 592 is operated. When the start button 552 is in the triggered state, a trigger signal is outputted. When the user wants to perform mowing or traveling, the user needs to continuously trigger the start button 552. The difference is that this trigger needs to last for a longer time, such as 3 seconds. When the user continuously triggers the start button 552, the user needs to operate the brake assembly 592 to enable the display screen 51 to enter the second display interface from the first display interface. The second display interface is a startup interface. In this example, the brake assembly 592 being operated includes the brake assembly 592 being triggered and then released. In some examples, when the user does not operate the brake assembly 592 after operating the start button 552 to the triggered state for a long time, a flashing icon appears on the display screen 51 to remind the user to operate the brake assembly 592.

In this manner, when the user attempts to activate the traveling function of the riding mowing device 100, the user needs to actively operate the brake assembly to trigger and release the brake assembly. In this manner, the safety of the riding mowing device 100 during startup can be improved, and the accelerator assembly 591 can be prevented from being accidentally pressed to start the traveling motor 933 unconsciously.

Of course, in the preceding example, the user's intention to activate the traveling function of the device is expressed in the method of operating the brake assembly 592. In some examples, the riding mowing device 100 further includes an operating member configured to at least perform a startup operation that the user expects the riding mowing device 100 to perform, and the main control circuit 952 is configured to switch from the first state to the second state when acquiring at least the startup operation that the user expects the riding mowing device 100 to perform. The preceding operating member may be the brake assembly 592 or a biometric assembly, such as a fingerprint recognition assembly or a facial recognition assembly. In some examples, the preceding operating member may be a gear shifter configured to control the riding mowing device 100 to move forward or backward. In some examples, the preceding operating member may be a dedicated button.

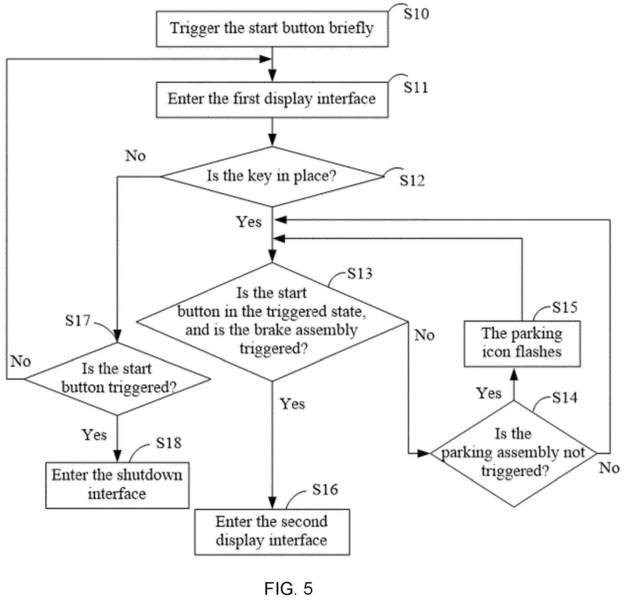

Next, a control method for switching the display interface 510 of the display screen 51 from the first display interface to the second display interface is described in conjunction with FIG. 5, and the steps are described below.

In S10, the start button is triggered briefly.

In S11, the display interface of the display screen is controlled to be the first display interface.

The first display interface is used for displaying the remaining power of the current power supply assembly.

In S12, whether the key is in place is determined. If the key is in place, step S13 is performed. If the key is not in place, step S17 is performed.

When the key is inserted into the keyhole, it is considered that the key is in place. When the key is not inserted into the keyhole, it is considered that the key is not in place.

In S13, whether the start button is in the triggered state and whether the brake assembly is triggered are determined. If the start button is in the triggered state and the brake assembly is triggered, step S16 is performed. If the start button is not in the triggered state or the brake assembly is not triggered, step S14 is performed.

When the display interface of the display screen is the first display interface, the user needs to press and hold the start button for about 3 seconds, and at the same time, the user needs to trigger the parking assembly.

In S14, whether the parking assembly is triggered is determined. If the parking assembly is triggered, step S13 is performed. If the parking assembly is not triggered, step S15 is performed.

In S15, the parking icon on the display interface of the display screen flashes, and step S13 is performed.

When the parking icon on the display interface of the display screen flashes, the display interface of the display screen cannot be successfully switched from the first display interface to the second display interface. When the user observes the parking icon flashing, the user needs to choose to trigger the brake assembly.

In S16, the display interface of the display screen is controlled to switch from the first display interface to the second display interface.

In S17, whether the start button is triggered briefly is determined. If the start button is triggered briefly, step S18 is performed. If the start button is not briefly triggered, step S11 is performed.

In S18, the shutdown interface is accessed.

The display interface 510 of the display screen 51 entering the second display interface is a prerequisite for the main control circuit 952 to switch from the first state to the second state. That is to say, only when the display interface 510 of the display screen 51 is the second display interface, the main control circuit 952 can switch from the first state in which the main control circuit 952 prohibits the traveling motor 933 from being started to the second state in which the main control circuit 952 allows the traveling motor 933 to be started.

In some examples, when the display interface 510 of the display screen 51 enters the first display interface, if the user does not perform other operations on the riding mowing device 100 for a long time, the main control circuit 952 controls the riding mowing device 100 to enter a sleep state. When the user wants to wake up the riding mowing device 100 again, the user needs to trigger the start button 552 again. In some examples, when the display interface 510 of the display screen 51 is the first display interface, after the user briefly triggers the start button 552 again, the main control circuit 952 controls the display interface of the display screen 51 to enter the shutdown interface. When the display screen 51 enters the shutdown interface for a period of time, the main control circuit 952 controls the riding mowing device 100 to enter the sleep state. When the user wants to wake up the riding mowing device 100 again, the user needs to briefly trigger the start button 552 again.

Next, when the display interface 510 of the display screen 51 is the second display interface, a control method for switching the main control circuit 952 from the first state in which the main control circuit 952 prohibits the traveling motor 933 from being started to the second state in which the main control circuit 952 allows the traveling motor 933 to be started is introduced.

When the display interface 510 of the display screen 51 is the second display interface, that is, the display interface 510 is the startup interface, if the main control circuit 952 switches from the first state in which the main control circuit 952 prohibits the traveling motor 933 from being started to the second state in which the main control circuit 952 allows the traveling motor 933 to be started, the following conditions must be satisfied: (1) the seat switch is in the triggered state; (2) the brake assembly 592 is in the released state; and (3) no traveling error code appears. The main control circuit 952 switches from the first state to the second state when all the preceding conditions are satisfied. When the main control circuit 952 is in the second state, when the user presses the accelerator assembly 591, the traveling motor 933 is started and drives the riding mowing device 100 to travel. In this example, the seat switch is disposed on the seat 92. When the user sits on the seat 92, it is considered that the seat switch is in the triggered state. When the user leaves the seat 92, it is considered that the seat switch is in the non-triggered state. When a traveling error code appears on the display interface 510 of the display screen 51, the user can eliminate the error code by operating the brake assembly 592.

In some examples, the control panel 52 further includes a first state indication unit 515 having a first indication state for indicating that the traveling motor 933 is prohibited from being started and a second indication state for indicating that the traveling motor 933 is allowed to be started. When the first state indication unit 515 switches from the first indication state to the second indication state, the main control circuit 952 switches from the first state to the second state accordingly. In some examples, the first state indication unit 515 is configured to be a light-emitting diode (LED) lamp. When the LED lamp is off, the state indication unit 515 is in the first indication state. When the LED lamp is on, the first state indication unit 515 is in the second indication state. When the state indication unit 515 switches from the first indication state to the second indication state, the following conditions must be satisfied: (1) the seat switch is in the triggered state; (2) the brake assembly 592 is in the released state; (3) no traveling error code appears; and (4) the accelerator assembly 591 is in the released state. In this example, a second state indication unit different from the first state indication unit 515 is further included. The second state indication unit is configured to indicate the state of a specific operating member. For example, the second state indication unit is configured to indicate whether the start button 552 is triggered, whether the seat switch is triggered, whether the key is inserted into the keyhole 554, or the like. Further, the second state indication unit may be configured to indicate the state of the accelerator assembly 591 or the brake assembly 592.

Next, a control method for switching the main control circuit 952 from the first state in which the main control circuit 952 prohibits the traveling motor 933 from being started to the second state in which the main control circuit 952 allows the traveling motor 933 to be started is described in conjunction with FIG. 6, and the steps are described below.

In S20, the display interface of the display screen is the second display interface.

The second display interface may be understood as a startup interface.

In S21, whether the seat switch is in the triggered state, whether the brake assembly is in the released state, and whether a traveling error code appears on the display screen are determined. When the preceding conditions are satisfied at the same time, step S22 is performed. If any one of the conditions is not satisfied, step S21 is performed.

In S22, a state indicator light is turned on.

The state indicator light is on, which is equivalent to the main control circuit switching from the first state in which the main control circuit prohibits the traveling motor from being started to the second state in which the main control circuit allows the traveling motor to be started.

In S23, the accelerator assembly is pressed.

In S24, the traveling motor starts.

In some examples, in the case where the main control circuit 952 is in the second state, when the user leaves the seat 92, the seat switch switches from the triggered state to the non-triggered state, and then the main control circuit 952 switches from the second state to the first state. At this time, the display interface 510 of the display screen 51 is still the second display interface. When the user sits on the seat 92 again, causing the seat switch to switch from the non-triggered state to the triggered state, the main control circuit 952 switches from the first state to the second state after the brake assembly 592 is operated. The advantage of this is that when the user gets off and gets on again while operating the riding mowing device 100 for mowing, the user needs to operate the brake assembly 592 again to allow the traveling motor 933 to be started, thereby improving safety and effectively avoiding accidental startup.

In some examples, in the case where the display interface 510 of the display screen 51 is the second display interface, that is, the startup interface, when the user wants to start the mowing motors 13, the user only needs to lift the PTO switch 555. It has been described above that when the PTO switch 555 is lifted, the mowing elements 12 rotate. When the PTO switch 555 is pressed, the mowing elements 12 stop. The user needs to sit on the seat 92 to complete the operation of lifting the PTO switch 555, otherwise the mowing motors 13 cannot be started. When the main control circuit 952 acquires a cutting deck error code, even if the user triggers the seat switch and lifts the PTO switch 555, the mowing motors 13 cannot be started. To sum up, the conditions for starting the mowing motors 13 at least include that the seat switch is in the triggered state, the PTO switch 555 is lifted, and the main control circuit 952 does not receive the cutting deck error code.

Next, a method for the main control circuit 952 to control the mowing motors 13 to start is introduced in conjunction with FIG. 7, and the steps are described below.

In S30, the display interface of the display screen is the second display interface, that is, the startup interface.

In S31, whether the seat switch is in the triggered state and whether a cutting deck error code appears are determined. When the preceding conditions are satisfied at the same time, step S32 is performed. If any one of the conditions is not satisfied, step S31 is performed.

In S32, the PTO switch is lifted.

In S33, the mowing motor starts and the mowing element starts working.

The above describes the control method for the riding mowing device 100 during a startup stage. The preceding control method is adopted so that the user can be effectively prevented from accidentally pressing the accelerator assembly 591 to start the traveling motor 933, thereby improving the safety performance of the riding mowing device 100.

To satisfy the requirements of the user, the riding mowing device 100 is provided with an operating member configured to control the traveling assembly 93 to travel forward or backward. When the user needs to control the riding mowing device 100 to move backward while operating the riding mowing device 100 to move forward, the user needs to release the accelerator assembly 591 and trigger the brake assembly 592 to set the rotational speed of the traveling motor 933 to zero or the forward speed of the riding mowing device 100 to zero and then operate the operating member to control the riding mowing device 100 to travel backward. In other words, when the riding mowing device 100 switches between forward movement and reverse movement, the user needs to release the accelerator and brake the riding mowing device 100 until the riding mowing device 100 stops.

In the present application, the operating member further includes an operating lever 553 operable by the user. The operating lever 553 is connected to the main control circuit 952 and is configured to control the riding mowing device 100 to switch between a forward state and a reverse state. The operating lever 553 has three gears operable by the user. The operating lever 553 has a forward gear, a reverse gear, and a neutral gear. The operating lever 553 has a first position when set in the forward gear, has a second position when set in the reverse gear, and has a third position when set in the neutral gear. When the operating lever 553 is set at the first position, the riding mowing device 100 is in the forward state. When the operating lever 553 is set at the second position, the riding mowing device 100 is in the reverse state. When the riding mowing device 100 is in the forward state, the user may control the forward speed of the riding mowing device 100 through the accelerator assembly 591. When the riding mowing device 100 is in the reverse state, the user may control the reverse speed of the riding mowing device 100 through the accelerator assembly 591.

In some examples, the operating lever 553 can switch the riding mowing device 100 between the forward state and the reverse state when being operated through at least two gears. When the operating lever 553 is operated from the forward gear, through the neutral gear, to the reverse gear, the main control circuit 952 controls the traveling motor 933 to switch from a first rotational state to a second rotational state. When the operating lever 553 is operated from the reverse gear, through the neutral gear, to the forward gear, the main control circuit 952 controls the traveling motor 933 to switch from the second rotational state to the first rotational state. When the traveling motor 933 is in the first rotational state, the riding mowing device 100 moves forward. When the traveling motor 933 is in the second rotational state, the riding mowing device 100 moves backward.

When the operating lever 553 is in the forward gear and the accelerator assembly 591 is in the triggered state, the riding mowing device 100 moves forward at a corresponding rotational speed in response to the state of the accelerator assembly 591. **If** the user wants to control the riding mowing device 100 to move backward, the user does not need to release the accelerator assembly 591, and the user only needs to adjust the operating lever 553 from the forward gear, through the neutral gear, to the reverse gear in sequence to switch the riding mowing device 100 from the forward state to the reverse state. During the preceding switching process, the rotational speed of the traveling motor 933 gradually decreases to 0, and then the traveling motor 933 directly rotates reversely to accelerate to a state matching the accelerator assembly 591, thereby driving the riding mowing device 100 to move backward. Similarly, when the operating lever 553 is in the reverse gear and the accelerator assembly 591 is in the triggered state, the riding mowing device 100 moves backward at a corresponding rotational speed in response to the state of the accelerator assembly 591. **If** the user wants to control the riding mowing device 100 to move forward, the user does not need to release the accelerator assembly 591, and the user only needs to adjust the operating lever 553 from the reverse gear, through the neutral gear, to the forward gear in sequence to switch the riding mowing device 100 from the reverse state to the forward state. During the preceding switching process, the rotational speed of the traveling motor 933 gradually decreases to 0, and then the traveling motor 933 directly rotates forward to accelerate to a state matching the accelerator assembly 591, thereby driving the riding mowing device 100 to move backward. The traveling motor 933 rotates forward, that is, the traveling motor 933 is in the first rotational state. The traveling motor 933 rotates reversely, that is, the traveling motor 933 is in the second rotational state.

The preceding method for switching between the forward state and the reverse state is adopted so that the user experience during switching between forward movement and reverse movement can be improved, and the user does not need to release the accelerator and only needs to switch the gear of the operating lever 553 to switch between forward movement and reverse movement. The neutral gear in this example has the function of stopping the machine. When the user adjusts the operating lever 553 to the neutral gear, the rotational speed of the traveling motor 933 is no longer controlled by the accelerator assembly 591. When the operating lever 553 is operated to the neutral gear, the main control circuit 592 detects that the operating lever 553 is in the neutral gear and controls the traveling motor 933 to decelerate or directly stop driving the traveling motor 933.

In some examples, the main control circuit 592 is configured to acquire the device parameter of the riding mowing device 100 during traveling and when the operating lever 553 is operated to switch between the forward state and the reverse state, determine, based on the acquired device parameter, whether to respond to a forward gear signal or a reverse gear signal outputted by the operating lever 553. The preceding device parameter includes the traveling speed of the riding mowing device 100, the state of the accelerator assembly 591, or the duration after the operating lever 553 is operated to the neutral gear. The main control circuit 592 is configured to acquire the traveling speed of the riding mowing device 100 during traveling and when the operating lever 553 is operated to switch between the forward state and the reverse state, determine, based on the acquired traveling speed, whether to respond to the forward gear signal or the reverse gear signal outputted by the operating lever 553. When the acquired traveling speed is less than or equal to a first speed threshold, the forward gear signal or the reverse gear signal outputted by the operating lever 553 is not responded to. It is to be understood that when the acquired traveling speed is less than or equal to the first speed threshold, the riding mowing device 100 is controlled to stop traveling. The first speed threshold is greater than or equal to 0.2 km/h and less than or equal to 0.4 km/h. In some examples, the first speed threshold is set to 0.3 km/h. In this example, after the main control circuit 952 controls the riding mowing device 100 to stop traveling, the user cannot start the traveling motor 933 by pressing the accelerator assembly 591. To restart the traveling motor 933, the user needs to operate the brake assembly 592 to switch the main control circuit 952 to the second state and then trigger the accelerator assembly 591 to start the traveling motor 933.

In some examples, the main control circuit 952 is configured to acquire the device parameter of the riding mowing device 100 during traveling and when the operating lever 553 is operated to the neutral gear, control the riding mowing device 100 to stop traveling based on the acquired device parameter. The preceding device parameter includes the traveling speed of the riding mowing device 100, the state of the accelerator assembly 591, or the duration after the operating lever 553 is operated to the neutral gear. When the riding mowing device 100 is traveling, the main control circuit 952 is configured to acquire the duration after the operating lever 553 is switched to the neutral gear and when the preceding duration is greater than or equal to a first time threshold, control the riding mowing device 100 to stop traveling. In some examples, the first time threshold is greater than or equal to 2 seconds. In some of the preceding examples, controlling the riding mowing device 100 to stop traveling may be understood as that the main control circuit 952 stops driving the traveling motor 933 or may be understood as that the main control circuit 952 controls the traveling motor 933 to be in an electronic parking state. In some examples, a clutch structure is provided between the traveling motor 933 and the traveling wheels, and the clutch structure provided between the traveling motor 933 and the traveling wheels is provided so that the rotational speed of the traveling motor 933 can be prevented from being transmitted to the traveling wheels, thereby stopping the riding mowing device 100 from traveling.

Next, a method for the main control circuit 952 to control the riding mowing device 100 to move forward or backward is described in conjunction with FIG. 8, and the steps are described below.

In S40, the traveling motor is operating.

The main control circuit controls the traveling motor to operate, thereby driving the riding mowing device to move forward or backward on the ground.

In S41, whether the gear is switched to neutral is determined. If the gear is switched to neutral, step S42 is performed. If the gear is not switched to neutral, step S41 is performed.

In S42, whether the traveling speed of the riding mowing device is less than or equal to the first speed threshold is determined. If the traveling speed is less than or equal to the first speed threshold, step S49 is performed. If the traveling speed is greater than the first speed threshold, step S43 is performed.

In the present application, when the operating lever 553 is set to neutral, the main control circuit 952 controls the traveling motor 933 to decelerate or stops driving the traveling motor 933. If the user sets to neutral for a long time, the rotational speed of the traveling motor 933 gradually decreases to 0.

In S43, whether the current gear is the forward gear is determined. If the current gear is the forward gear, step S44 is performed. If the current gear is not the forward gear, step S46 is performed.

In the present application, when the user needs to switch between forward movement and reverse movement, the user needs to operate the operating lever 553 to the neutral gear and then operate the operating lever 553 to the forward gear or the reverse gear.

In S44, the "D" icon appears on the main control circuit control display screen and the buzzer sounds to remind that the gear has been set successfully.

In S45, the main control circuit controls the traveling motor to decelerate to 0 and then controls the traveling motor to rotate forward. Step S41 is performed again.

In the present application, the forward rotation of the traveling motor means that the riding mowing device travels forward.

In S46, whether the current gear is the reverse gear is determined. If the current gear is the reverse gear, step S47 is performed. If the current gear is not the reverse gear, step S42 is performed.

In S47, the "R" icon appears on the main control circuit control display screen and the buzzer sounds to remind that the gear has been set successfully.

In S48, the main control circuit controls the traveling motor to decelerate to 0 and then controls the traveling motor to reverse. Step S41 is performed again.

In the present application, the reverse rotation of the traveling motor 933 means that the riding mowing device 100 travels backward.

In the present application, the buzzer is disposed on the operating assembly 50 so that the buzzer is closer to the user and it is easier to detect the sound the buzzer makes. The buzzer may be provided on the control panel 52 or the steering wheel assembly 56. In some examples, when the traveling error code or the mowing error code of the riding mowing device 100 is successfully eliminated, the buzzer also sounds a prompt. In some examples, when the riding mowing device 100 rolls back on a slope, the buzzer sounds to alert the user. To sum up, the buzzer is provided on the riding mower to provide a prompt for completion of an operation command or to provide a prompt when a fault occurs or is about to occur.

In this manner, the operating lever 553 with three gears is provided so that the user can switch between the forward gear and the reverse gear without releasing the accelerator assembly 591. On the other hand, whether the current user intends to park or switch driving gear can be determined actively, thereby improving the user experience. Of course, when the user operates the operating lever 553 to switch between the forward state and the reverse state, the user may release the accelerator assembly 591, may continue triggering the accelerator assembly 591, or may release the accelerator assembly 591 and trigger the accelerator assembly 591 again. After the gear is switched successfully, the rotational speed of the traveling motor 933 is set according to the current state of the accelerator assembly 591.

In some examples, the riding mowing device 100 further includes a preset mode. The preceding preset mode is the default working mode and cannot be changed by the user. In the preset mode, the traveling motor 933 can still work so that it can be ensured that the riding mowing device 100 can drive itself back home or to an after-sales station for repair.

The main control circuit 952 is configured to control the riding mowing device 100 to enter the preset mode when acquiring a preset failure signal. In the preset mode, the traveling motor 933 can drive the riding mowing device 100 to travel. In some examples, the preset failure signal includes no signal transmission between the signal circuit 951 and the display circuit 953 within a preset time. The preset failure signal further includes no signal transmission between the main control circuit 952 and the signal circuit 951 within a preset time. From the perspective of safety and energy saving, when the riding mowing device 100 enters the preset mode, the mowing motors 13 are prohibited from being started. In some examples, in the preset mode, the main control circuit 952 controls the maximum rotational speed of the traveling motor 933 to be less than or equal to 1100 rpm. In some examples, in the preset mode, the main control circuit 952 controls the maximum rotational speed of the traveling motor 933 to be less than or equal to 900 rpm. In some examples, in the preset mode, the main control circuit 952 controls the rotational speed of the traveling motor 933 to be the preset first rotational speed. The first rotational speed is a preset fixed value, that is, in the preset mode, the user is prohibited from adjusting the traveling speed of the riding mowing device 100. In some examples, in the preset mode, the main control circuit 952 prohibits responding to at least some of the signals outputted by the operating assembly 50, such as traveling gear information, key information, and start button information. Those skilled in the art may set other signals the other prohibition signals.

In some examples, the main control circuit 952 is configured to control the traveling motor 933 and the mowing motors 13 to shut down when acquiring the preset failure signal and control the riding mowing device 100 to enter the preset mode when acquiring the restart signal of the riding mowing device 100 and acquiring the preset failure signal again.

In some examples, the riding mowing device 100 further has a reverse mowing function. In other words, when the riding mowing device 100 is moving backward, the main control circuit 952 can control the mowing motors 13 to rotate, thereby implementing the reverse mowing function. The riding mowing device 100 has a first mode in which mowing is prohibited during reverse movement and a second mode in which mowing is allowed during reverse movement. When the display screen 51 of the riding mowing device 100 enters the second display interface, that is, the startup interface, the riding mowing device 100 automatically enters the first mode in which mowing is prohibited during reverse movement. In this manner, the user can be prevented from starting the mowing motors 13 during reverse movement due to an erroneous operation. In this case, the icon indicating that mowing is prohibited during reverse movement is lit up on the second display interface.

The riding mowing device 100 further includes a fifth button 516. When the fifth button 516 is pressed, the main control circuit 952 allows the mowing motors 13 to be started, that is, the riding mowing device 100 operates in the second mode in which mowing is allowed during reverse movement, and the icon indicating that mowing is prohibited during reverse movement on the first display interface disappears. When the user presses the PTO switch 555, the mowing motors 13 are started and the mowing elements 12 start to rotate to perform a mowing operation. When the riding mowing device 100 is performing reverse mowing, if the operator presses the fifth button 516 again, the main control circuit 952 prohibits the mowing motors 13 from being started, that is, the riding mowing device 100 operates in the second mode in which mowing is prohibited during reverse movement. The icon indicating that mowing is prohibited during reverse movement is lit up on the first display interface. In this case, the mowing motors 13 are stopped so that the mowing elements 12 stop rotating. In this manner, the user can enable the reverse mowing function of the riding mowing device 100 more conveniently and can also disable the reverse mowing function of the riding mowing device 100 more quickly. Therefore, not only can the various mowing requirements of the user be satisfied, but also safety can be ensured when the user enables the reverse mowing function.

In some examples, the state of the fifth button 516 matches the icon indicating that mowing is prohibited during reverse movement on the second display interface. Under normal circumstances, the icon indicating that mowing is prohibited during reverse movement is lit up on the second display interface, and the riding mowing device 100 operates in the first mode in which mowing is prohibited during reverse movement. When the user triggers the fifth button 516, the icon indicating that mowing is prohibited during reverse movement on the second display interface disappears, and the riding mowing device 100 operates in the second mode in which mowing is allowed during reverse movement. When the user triggers the fifth button 516 again, the icon indicating that mowing is prohibited during reverse movement on the second display interface is lit up again, and the riding mowing device 100 operates in the first mode in which mowing is prohibited during reverse movement. By repeating this process, the operator can select whether to enable or disable the reverse mowing function of the riding mowing device 100 through the fifth button 516. On the other hand, the operator can determine whether the riding mowing device 100 is currently operating in the first mode in which mowing is prohibited during reverse movement or the second mode in which mowing is allowed during reverse movement through the state of the icon indicating that mowing is prohibited during reverse movement on the second display interface.

In some examples, after the riding mowing device 100 exits the startup interface, the main control circuit 952 controls the riding mowing device 100 to enter the first mode in which mowing is prohibited during reverse movement. When the user needs to enable the reverse mowing function, the user needs to trigger the fifth button 516 again, thereby entering the second mode in which mowing is allowed during reverse movement.

For example, the self-propelled device in the present application is a riding mower. It is to be understood that the self-propelled device may also be a snow thrower, a stand-on mower, a tractor, or the like.

FIG. 9 is a perspective view of a riding mower according to an example of the present application. FIG. 10 is a perspective view of the riding mower shown in FIG. 9 from another perspective. FIG. 11 is a control circuit diagram of the riding mower shown in FIG. 9. The user may sit on the riding mower to control the riding mower to trim lawns and other vegetation. The riding mower includes a frame 22, a power supply assembly 21, and a traveling assembly including traveling wheels 31 and a traveling motor 32 for driving the travel wheels 31 to travel. The riding mower further includes an operating device 23, a detection device, and a controller 60. The power supply assembly 21 is configured to supply electrical energy to the riding mower. The operating device 23 is configured to send an automatic parking signal when triggered by the user to trigger the riding mower to enter or exit an automatic parking mode. In some examples, the riding mower further includes a support portion configured to support the user. The support portion may be the seat 92 or a support plane. The controller 60 is configured to control the riding mower to enter the automatic parking mode when the user leaves the support portion. The detection device is configured to detect the working parameter of the traveling motor 32 or the posture parameter of the riding mower when the riding mower is in the automatic parking mode. The controller 60 is electrically connected to at least the traveling motor 32 and the detection device to control the operation of the traveling motor 32. In some examples, the controller 60 is configured to acquire the working parameter of the traveling motor 32 or the posture parameter of the riding mower based on the detection device when the riding mower is in the automatic parking mode and switch the riding mower from the automatic parking mode to an electronic brake mode or a power-off mode when the working parameter or the posture parameter exceeds a preset range. The preceding preset range may be understood as a range set when the riding mower leaves the factory, and working within this range does not cause damage to the electronic components. The power-off mode may be understood as a mode in which the electrical connection between the power supply assembly 21 and the whole machine is cut off.

The power supply assembly 21 is configured to supply electrical energy to the riding mower. The power supply assembly 21 is configured to supply power to the mowing motors, the traveling motor 32, and other electronic components or electronic assemblies on the riding mower. The power supply assembly 21 includes multiple battery packs electrically connected to an external battery management circuit board. The battery management circuit board filters the output of each battery pack through a Kalman filter so that a predetermined algorithm can be used to estimate the state of charge (SOC), the state of health (SOH), the state of power (SOP), the remaining useful life (RUL), and other indicators to ensure the safety and reliability of the battery system. In the present application, the charging startup voltage is set to about 23 V, and the discharge cutoff voltage is set to about 35 V to prevent the battery pack from being over-discharged. Moreover, the settings for the startup voltage and the discharge cutoff voltage are centrally controlled in the electronic control board of the machine, thereby facilitating battery management. After the power supply assembly 21 supplies power to the traveling motor 32, the traveling motor 32 drives the traveling wheels 31 to travel. When the riding mower travels on a slope, the riding mower is subjected to downward gravity and tends to slide downward. If the user controls the operating device 23 to send the automatic parking signal or leaves the support portion as needed, the riding mower is triggered to enter the automatic parking mode. The traveling motor 32 decelerates by braking or coasts to a stop, and a rotational speed detection module 53 detects the actual rotational speed of the traveling motor 32 and sends the actual rotational speed to the controller 60. When the controller 60 determines that the rotational speed of the traveling motor 32 drops to a value, that is, the rotational speed of the traveling motor 32 is less than or equal to a preset rotational speed threshold, to make the riding mower stationary at the current position, the controller 60 controls the power supply assembly 21 to output a certain current to the traveling motor 32, and the current causes the traveling motor 32 to generate a certain amount of negative torque. The negative torque and the external torque acting on the riding mower and causing the riding mower to tend to slide have equal magnitudes and opposite directions. In this manner, due to the torque balance, the traveling motor 32 is locked at a certain position so that the riding mower is stationary at the position when entering the automatic parking mode. In some examples, when the angle of the slope on which the riding mower is located is larger, to continue maintaining the automatic parking mode, the traveling motor 32 needs to output larger negative torque, the corresponding operating current also increases, the control module generates more heat, and problems of damage to electronic components and continuous power consumption during long-time parking occur. The fact that the angle of the slope on which the riding mower is located is larger may be understood as that the angle of inclination of the plane on which the traveling wheels of the riding mower are located is larger.

The controller 60 is configured to acquire the posture parameter of the riding mower or the working parameter of the traveling motor 32 based on the detection device when the riding mower is in the automatic parking mode and control the riding mower to switch from the automatic parking mode to the electronic brake mode or the power-off mode when the posture parameter or the working parameter exceeds the preset range.

In some examples, the riding mower further includes a rotor position detection module 54 configured to detect the position of a rotor 321. The rotor position detection module 54 may include sensors, for example, multiple Hall sensors. The Hall sensors may be disposed along the circumferential direction of the rotor 321 of the traveling motor 32. When the rotor 321 enters and exits a preset range, signals from the Hall sensors change, and the output signal from the rotor position detection module 54 changes accordingly. In this manner, the position of the rotor 321 of the traveling motor 32 can be obtained according to the detection signal outputted by the rotor position detection module 54. The position of the rotor 321 may also be estimated based on the current of the traveling motor 32. The controller 60 is configured as follows: after it is determined that the rotational speed of the traveling motor 32 is less than or equal to the preset rotational speed threshold, the rotor position detection module 54 can detect the current position of the rotor 321 of the traveling motor 32, and the controller 60 selects the current position of the rotor 321 of the traveling motor 32 as a reference position. In this manner, when the rotor 321 deviates from the reference position, the controller 60 can compare the position of the deviated rotor 321 with the reference position so that the direction in which the rotor 321 deviates from the reference position can be determined, thereby determining the rotation trend of the traveling motor 32 and the sliding trend of the riding mower. After the rotor 321 deviates from the reference position, the power supply assembly 21 is controlled to output a certain current which causes the traveling motor 32 to generate a certain amount of negative torque so that the rotor 321 of the traveling motor 32 returns to the reference position. In this manner, the riding mower can remain stationary at one position. For example, the riding mower can remain stationary at the position when entering the parking mode.

FIG. 12 is a diagram illustrating the structure of a driver circuit according to an example of the present application. A driver circuit 70 is electrically connected to the controller 60 and the traveling motor 32 and can control the operation of the traveling motor 32 according to the control signal outputted by the controller 60. In some examples, the traveling motor 32 is a three-phase motor having three phases of windings, and the driver circuit 70 is electrically connected to the three phases of windings of the traveling motor 32. In some examples, the driver circuit 70 includes power switching transistors. The power switching transistors can turn on and off the electrical connection between the power supply assembly 21 and the traveling motor 32 and can adjust the current outputted by the power supply assembly 21 to the traveling motor 32 according to different control signals outputted by a control module 16. The preceding electronic brake mode may be understood as follows: the controller 60 outputs the control signal to control the power switching transistors Q1, Q2, and Q3 in the driver circuit 70 to be turned on at the same time and control the power switching transistors Q4, Q5, and Q6 to be turned off at the same time so that while the electrical connection between the traveling motor 32 and the power supply assembly 21 is disconnected, the current in the windings of the traveling motor 32 is rapidly dissipated to achieve short-circuit braking. Alternatively, the preceding electronic brake mode may be set as follows: the controller 60 outputs the control signal to control the power switching transistors Q4, Q5, and Q6 in the driver circuit 70 to be turned on at the same time and control the power switching transistors Q1, Q2, and Q3 to be turned off at the same time. **In** the present application, the specific implementation of the electronic brake mode is not limited.

**In** some examples, the working parameter of the traveling motor 32 includes the operating current of the traveling motor 32. When the operating current of the traveling motor 32 exceeds a preset current range, the controller 60 controls the riding mower to switch from the automatic parking mode to the electronic brake mode. FIG. 13 is a flowchart of a control method for a riding mower according to an example of the present application. After the riding mower is started, the user sends the automatic parking signal through the operating device 23 to trigger the riding mower to enter the automatic parking mode. After the controller 60 determines that the riding mower enters the automatic parking mode, a current detection module 55 in the detection device acquires the operating current of the motor and feeds back the current information to the controller 60. When the operating current exceeds the preset range, the controller 60 sends the control signal to the driver circuit 70.

As shown in FIG. 13, the method includes the steps below.

In S51, the riding mower starts.

In S52, an automatic parking signal sent by the user through the operating device is acquired, and the riding mower is triggered to enter an automatic parking mode based on the active parking signal.

In S53, the real-time operating current of the motor is acquired based on the current detection module.

In S54, whether the current operating current exceeds a preset range is determined. If the current operating current exceeds the preset range, step S55 is performed. **If** the current operating current does not exceed the preset range, step S56 is performed.

In S55, the automatic parking mode is deactivated.

In S56, the automatic parking mode is maintained.

In some examples, the working parameter of the traveling motor 32 includes the working time during which the traveling motor 32 outputs negative torque after the riding mower enters the automatic parking mode. After the riding mower is in the automatic parking mode, the controller 60 controls the riding mower to switch from the automatic parking mode to the electronic brake mode when the working time during which the traveling motor 32 outputs negative torque exceeds a preset time range. FIG. 14 is a flowchart of another control method for a riding mower according to an example of the present application. After the riding mower is started, the user sends the automatic parking signal through the operating device 23 or leaves the support portion to trigger the riding mower to enter the automatic parking mode. After the controller 60 determines that the riding mower enters the automatic parking mode, the detection device detects the working time during which the traveling motor 32 outputs negative torque after the riding mower enters the automatic parking mode and feeds back the time information to the controller 60. When the working time exceeds the preset range, the controller 60 sends the control signal to the driver circuit 70 to switch the riding mower from the automatic parking mode to the electronic brake mode.

As shown in FIG. 14, the method includes the steps below.

In S61, the riding mower starts.

In S62, an automatic parking signal sent by the user through the operating device is acquired, and the riding mower is triggered to enter an automatic parking mode based on the active parking signal.

In S63, the working time during which the traveling motor outputs negative torque is acquired.

In S64, whether the current working time exceeds a preset range is determined. If the current working time exceeds the preset range, step S65 is performed. If the current working time does not exceed the preset range, step S66 is performed.

In S65, the automatic parking mode is deactivated.

In S66, the automatic parking mode is maintained.

In some examples, the working parameter of the traveling motor 32 includes the output torque of the traveling motor 32. After the riding mower is in the automatic parking mode, the controller 60 controls the riding mower to switch from the automatic parking mode to the electronic brake mode when the output torque of the traveling motor 32 exceeds a preset torque range. FIG. 15 is a flowchart of another control method for a riding mower according to an example of the present application. After the riding mower is started, the user sends the automatic parking signal through the operating device 23 or leaves the support portion to trigger the riding mower to enter the automatic parking mode. After the controller 60 determines that the riding mower enters the automatic parking mode, the detection device detects the output torque of the traveling motor 32 and feeds back the torque information to the controller 60. When the torque exceeds the preset range, the controller 60 sends the control signal to the driver circuit 70 to switch the riding mower from the automatic parking mode to the electronic brake mode.

As shown in FIG. 15, the method includes the steps below.

In S71, the riding mower starts.

In S72, an automatic parking signal sent by the user through the operating device is acquired, and the riding mower is triggered to enter an automatic parking mode based on the active parking signal.

In S73, the output torque of the traveling motor is acquired.

In S74, whether the current working time exceeds a preset torque range is determined. If the current working time exceeds the preset torque range, step S75 is performed. If the current working time does not exceed the preset torque range, step S76 is performed.

In S75, the automatic parking mode is deactivated.

In S76, the automatic parking mode is maintained.

In some examples, the posture parameter of the riding mower includes the angle of inclination of the plane where the traveling wheels 31 of the riding mower are located relative to the horizontal plane. Those skilled in the art may determine the current posture of the riding mower by detecting the angles of inclination of different components of the riding mower. In some examples, the components such as the traveling wheels 31, the seat 92, the battery pack, the frame 91, and the housing of the riding mower may be detected by the detection device. When the angle of inclination of the plane where the traveling wheels 31 are located exceeds a preset angle range, the controller 60 controls the riding mower to switch from the automatic parking mode to the electronic brake mode.

As shown in FIG. 16, after the riding mower is started, the user sends the automatic parking signal through the operating device 23 or leaves the support portion to trigger the riding mower to enter the automatic parking mode. After the controller 60 determines that the riding mower enters the automatic parking mode, an angle sensor 57 in the detection device acquires the angle of inclination of the plane where the traveling wheels 31 of the riding mower are located in real time and feeds back the angle information to the controller 60. When the angle of inclination exceeds the preset range, the controller 60 sends the control signal to the driver circuit 70 to switch the riding mower from the automatic parking mode to the electronic brake mode.

As shown in FIG. 16, the method includes the steps below.

In S81, the riding mower starts.

In S82, an automatic parking signal sent by the user through the operating device is acquired, and the riding mower is triggered to enter an automatic parking mode based on the active parking signal.

In S83, the angle of inclination of the plane where the traveling wheels of the riding mower are located is acquired in real time based on the angle sensor.

In S84, whether the current angle of inclination exceeds a preset range is determined. If the current angle of inclination exceeds the preset range, step S85 is performed. If the current angle of inclination does not exceed the preset range, step S86 is performed.

In S85, the automatic parking mode is deactivated.

In S86, the automatic parking mode is maintained.

The form of the operating device 23 may include, but is not limited to, a button, a toggle, a rotation, a touchscreen, or an external device. In some examples, the user may press a button, toggle a switch, or touch an option on the touchscreen to trigger the operating device 23 to send the automatic parking signal or leave the support portion to trigger the riding mower to enter or exit the automatic parking mode.

The riding mower further includes an alarm assembly 80 configured to issue an alarm to alert the user when the riding mower switches from the automatic parking mode to the electronic brake mode. As shown in FIG. 11, the alarm assembly 80 is electrically connected to the controller 60 and may be a buzzer or another form of device. When the riding mower enters the automatic parking mode, the controller 60 acquires the operating current of the traveling motor 32, the working time during which the traveling motor 32 outputs negative torque, the torque outputted by the traveling motor 32, and the angle of inclination of the plane where the traveling wheels 31 of the riding mower are located relative to the horizontal plane, compares the parameters with the preset ranges, and when it is determined that the posture parameter of the riding mower or the working parameter of the traveling motor 32 exceeds the preset range, sends the control signal to the alarm assembly 80. The corresponding alarm assembly 80 issues an alarm to alert the user.

In some examples, when the riding mower performs the mowing operation, the riding mower cannot move due to stones or dense grass in front. At this time, the traveling motor 32 is still working. The locked rotor current increases rapidly, the temperature rises rapidly accordingly, and there is a risk of burning the traveling motor 32. The current detection module 55 detects that the operating current of the traveling motor 32 exceeds a protection threshold for a period of time. At the same time, the rotor position detection module 54 detects that the rotation position of the rotor 321 is less than a certain angle within a certain period of time, or the rotational speed detection module 53 detects that the rotational speed is less than a certain value. After the controller 60 acquires this information, the riding mower enters the locked rotor protection. The controller 60 sends the control signal to the driver circuit 70, and the driver circuit 70 short-circuits the three-phase transmission lines of the traveling motor 32, thereby entering three-phase short-circuit braking. If the machine is restarted within a short period of time after being shut down, the current protection threshold is lowered to prevent the following: the traveling motor 32 is damaged by high temperature caused by high current due to an unresolved locked rotor condition after restarting.

In some examples, the riding mower further includes a power circuit 90 connected to the power supply assembly 21. The power circuit 90 is configured to receive electrical energy from the power supply assembly 21 and convert the electrical energy of the power supply assembly 21 into electrical energy that is suitable for use by at least the controller 60.

In some examples, the posture parameter or the working parameter of the traveling motor when the riding mower is in the automatic parking mode is detected. The detection device detects the posture parameter or the working parameter of the traveling motor 32 when the riding mower is in the automatic parking mode and sends the detected parameter to the controller 60. When the riding mower is in the automatic parking mode, the riding mower is controlled to switch from the automatic parking mode to the electronic brake mode or the power-off mode based on the acquired posture parameter or the acquired working parameter of the traveling motor. When the riding mower is in the automatic parking mode, the controller 60 compares the working parameter of the traveling motor 32 or the posture parameter detected by the detection device with the preset range, and when the posture parameter or the working parameter of the traveling motor 32 exceeds the preset range, the automatic parking mode is deactivated.

FIG. 17 is a flowchart of a control method for a riding mower according to an example of the present application. The method may be performed by the riding mower. As shown in FIG. 17, the method includes the steps below.

In S91, the riding mower starts.

The user may start the riding mower by inserting the key into the keyhole or pressing the start button. After the riding mower is started, the power supply assembly 21 supplies electrical energy to multiple assemblies of the riding mower so that the multiple assemblies can operate normally.

In S92, the riding mower enters an automatic parking mode.

When the user needs to perform automatic parking, the user may send the automatic parking signal through the operating device 23 or by leaving the support portion. After receiving the parking signal, the controller 60 controls the riding mower to enter the automatic parking mode.

In S93, the posture parameter of the riding mower or the working parameter of the traveling motor is acquired.

In S94, whether the posture parameter or the working parameter of the traveling motor exceeds a preset range is determined.

The controller 60 compares the posture parameter or the working parameter of the traveling motor 32 detected by the detection device with the preset range to determine whether the posture parameter or the working parameter exceeds the preset range. If it is determined that the posture parameter or the working parameter exceeds the preset range, step S95 is performed, thereby controlling the riding mower to exit the automatic parking mode. If it is determined that the posture parameter or the working parameter does not exceed the preset range, step S96 is performed, thereby controlling the riding mower to continue maintaining the automatic parking mode.

In S95, the automatic parking mode is deactivated.

After determining that the posture parameter of the riding mower or the working parameter of the traveling motor 32 exceeds the preset range, the controller 60 sends the control signal to the driver circuit 70 to switch the riding mower from the automatic parking mode to the electronic brake mode or the power-off mode.

In S96, the automatic parking mode is maintained.

In the example of the present application, a control method for a riding mower is provided. After the riding mower starts and it is determined that the riding mower enters the automatic parking mode, the posture parameter or the working parameter of the traveling motor when the riding mower is in the automatic parking mode is detected to determine whether the posture parameter or the working parameter of the traveling motor exceeds the preset range. After the parameter exceeds the preset range, the riding mower is controlled to deactivate the automatic parking mode, thereby avoiding damage to electronic components and continuous power consumption caused by excessive parking current, protecting electronic components, saving energy consumption, and enabling the riding mower to adaptively deactivate the automatic parking mode.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A riding mowing device, comprising:
a frame;
a cutting assembly mounted on the frame and comprising a mowing element for cutting grass;
a traveling assembly comprising a traveling motor configured to drive the riding mowing device to travel on the ground;
a main control circuit electrically connected to the cutting assembly and the traveling assembly; and
an operating member connected to the main control circuit and configured to control a forward or a reverse state of the riding mowing device;
wherein the operating member has three gears: a forward gear, a neutral gear, and a reverse gear; and
the operating member is configured to control the riding mower to switch between a forward state and a reverse state when being operated through at least two gears;
wherein the main control circuit is configured to acquire a device parameter of the riding mowing device during traveling and in a case where the operating member is operated to switch between the forward state and the reverse state, control the riding mowing device to stop traveling based on the acquired device parameter.

2. The riding mowing device of claim 1, wherein the main control circuit is further configured to control the traveling motor to decelerate in a case where the operating member is switched to the neutral gear.

3. The riding mowing device of claim 2, wherein the device parameter comprises a traveling speed of the riding mowing device; and the main control circuit is configured to, in a case where the acquired traveling speed is less than or equal to a first speed threshold, control the riding mowing device to stop traveling.

4. The riding mowing device of claim 3, wherein the first speed threshold is greater than or equal to 0.2 km/h and less than or equal to 0.4 km/h.

5. The riding mowing device of claim 1, wherein the device parameter further comprises a state of an accelerator assembly or a duration after the operating member is operated to the neutral gear.

6. The riding mowing device of claim 5, wherein the main control circuit is configured to acquire the device parameter of the riding mowing device during traveling and in a case where the operating member is operated to the neutral gear, control the riding mowing device to stop traveling based on the acquired device parameter.

7. The riding mowing device of claim 6, wherein the main control circuit is configured to control the riding mowing device to stop traveling in a case where the duration after the operating member is operated to the neutral gear is greater than or equal to a preset time threshold.

8. The riding mowing device of claim 7, wherein the time threshold is greater than or equal to 2 seconds.

9. The riding mowing device of claim 1, wherein in a case where the operating member is operated from the forward gear, through the neutral gear, to the reverse gear, the main control circuit is further configured to control the traveling assembly to switch from a first rotational state to a second rotational state.

10. The riding mowing device of claim 9, wherein in a case where the operating member is operated from the reverse gear, through the neutral gear, to the forward gear, the main control circuit is further configured to control the traveling assembly to switch from the second rotational state to the first rotational state.

11. The riding mowing device of claim 6, wherein in a case where the riding mowing device is switched between the forward state and the reverse state, the accelerator assembly is in a triggered state.

12. The riding mowing device of claim 6, wherein in a case where the operating member is in the forward gear and the accelerator assembly is in a triggered state, the main control circuit is further configured to respond to a state of the accelerator assembly to control the riding mowing device to travel forward at a corresponding rotational speed.

13. The riding mowing device of claim 1, wherein the main control circuit is further configured to acquire the device parameter of the riding mowing device during traveling and in the case where the operating member is operated to switch between the forward state and the reverse state, determine, based on the acquired device parameter, whether to respond to a forward gear signal or a reverse gear signal outputted by the operating member.

14. The riding mowing device of claim 10, wherein the device parameter comprises a traveling speed of the riding mowing device; and the main control circuit is further configured to, in a case where the acquired traveling speed is greater than a first speed threshold, respond to a forward gear signal or a reverse gear signal outputted by the operating member.

15. A riding mowing device, comprising:
a frame;
a cutting assembly mounted on the frame and comprising a mowing element for cutting grass;
a traveling assembly comprising a traveling motor configured to drive the riding mowing device to travel on the ground;
a main control circuit electrically connected to the cutting assembly and the traveling assembly; and
an operating member electrically connected to the main control circuit and configured to control a forward state or a reverse state of the riding mowing device;
wherein the operating member has three gears: a forward gear, a neutral gear, and a reverse gear; and
the operating member is configured to control the riding mower to switch between a forward state and a reverse state when being operated through at least two gears;
wherein the main control circuit is configured to acquire a device parameter of the riding mowing device during traveling and in a case where the operating member is operated to switch between the forward state and the reverse state, determine, based on the acquired device parameter, whether to respond to a forward gear signal or a reverse gear signal outputted by the operating member.

16. The riding mowing device of claim 15, wherein the device parameter comprises a traveling speed of the riding mowing device; and the main control circuit is configured to, in a case where the acquired traveling speed is greater than a first speed threshold, respond to the forward gear signal or the reverse gear signal outputted by the operating member.

17. A riding mowing device, comprising:
a frame;
a cutting assembly mounted on the frame and comprising a mowing element for cutting grass;
a traveling assembly comprising a traveling motor configured to drive the riding mowing device to travel on the ground;
a main control circuit connected to the traveling motor and configured to control operation of the traveling motor;
a power supply device electrically connected to the traveling motor and the main control circuit; and
an operating member connected to the main control circuit and configured to control a forward state or a reverse state of the riding mowing device;
wherein the operating member has three gears: a forward gear, a neutral gear, and a reverse gear; and
the main control circuit is further configured to acquire a device parameter of the riding mowing device during traveling and in a case where the operating member is operated to the neutral gear, control the riding mowing device to stop traveling based on the acquired device parameter.

18. The riding mowing device of claim 17, wherein the device parameter comprises a traveling speed of the riding mowing device, a state of an accelerator assembly, or a duration after the operating member is operated to the neutral gear.
